# EUROPEAN PATENT SPECIFICATION

(11) **EP 0 571 157 B1**
(45) Date of publication and mention of the grant of the patent: **28.03.2001**
(21) Application number: 93303781.4
(22) Date of filing: 17.05.1993
(51) Int. Cl.: G05B 19/418

(54) **Method and apparatus for controlling a manufacturing system**
Verfahren und Gerät zur Steuerung eines Fertigungssystems
Méthode et appareil de commande d'un système de fabrication

(30) Priority: 16.05.1992 JP 14995792; 12.03.1993 JP 7887993
(43) Date of publication of application: 24.11.1993
(73) Proprietor: Nippei Toyama Corporation, Shinagawa-ku, Tokyo-to 140-0013 (JP)
(72) Inventor: Yasojima, Toshio, Tonami-shi, Toyama-ken (JP); Imai, Masanori, Takaoka-shi, Toyamahken 939-11 (JP)
(74) Representative: Browne, Robin Forsythe, Dr.

(56) References cited:
- EP-A- 0 107 191
- EP-A- 0 153 856
- WT/WERKSTATTSTECHNIK vol. 77, no. 8, August 1987, BERLIN, W.GERMANY pages 427 - 430 ANTON FRIEDL ET AL 'Modulares Steuerungskonzept f}r flexible Fertigungssysteme'

## Description

The present invention relates to a method and an apparatus for controlling a manufacturing system. More particularly, the present invention pertains to a method and an apparatus, which controls a transfer machine including a plurality of automatic machining units that are provided at a plurality of machining stations, respectively.

Japanese Examined Utility Mode Publication No. 2-32370 discloses a transfer machine system which includes a plurality of unit control panels, each of which includes a sequence control circuit and a power supply, and a plurality of sub-console boxes, which can be operated by an operator in order to control the respective unit control panel. Each one of the sequence control circuits corresponds to the respective automatic machining unit, and transmits an instruction signal to the corresponding machining unit according to a predetermined machining program.

The transfer machine system further includes a main control panel and a main control box. The main control panel internally includes a programmable controller which instructs each one of the unit control panels with a predetermined sequence control. The main control box permits the operator to control the entire unit control panels, via the main control panel. Each one of the sequence control circuits of the unit control panels is connected with the programmable controller, and data can be mutually transmitted therebetween. Therefore, each one of the machining units can be individually controlled by means of the respective sub-control boxes. Further, all the machining units can be collectively controlled by means of the main control box.

In this conventional system, the main control panel once gathers every information transmitted from each one of the machining units. The main control panel determines certain matters based on the gathered information, and transmits an instruction to each one of the unit control panels of the machining units. Therefore, the conventional system requires a longer period of time to perform the determinations and transmissions of signals (including collecting information and transmitting instructions). This causes cycle times of the transfer machine to be stretched.

The main control panel can not determine whether the entire system is controllable or not, nor adjust the control conditions thereof, until all the machining units are set up. Therefore, the installation and the maintenance of the conventional system cause the large troublesome. Furthermore, when some machining stations and units are added to the conventional system, the control program stored in the main control panel should be alternated. Therefore, the conventional system is less expandable.

Furthermore, according to the conventional system, when an operator collectively controls the machining units, the transfer devices, and jigs for clamping workpieces, via the main controller panel, the operator must go to the place where the main control box is disposed in order to operate it. The larger the system becomes, the more difficult it becomes for the operator to handle it.

EP-A-0153 856 discloses a real-time distributed database system having multiple processors that stores in the local memory of each processor only those variables necessary for execution of the programs necessary for execution of the programs in that processor. The performance of this system is enhanced by using the absolute address of variables in each program reference with automatic updating of all program references when the location of the variables are changed. The variables are continuously updated by the interaction of the multiple processors.

Accordingly, it is a primary object of the present invention to provide a method for controlling a manufacturing system which allows the system to be improved in its expansibility and operability, enhancing its production ability.

A further object of the present invention is to provide a control apparatus for realising the control method.

To achieve the foregoing and other objects and in accordance with the purpose of the present invention, there is provided a method of controlling a manufacturing system including a plurality of working units each of which includes an operational device for performing a given machining work, the manufacturing system further including a plurality of unit controllers which correspond to the respective working units, each of the unit controller comprising data storage means and controlling its own corresponding operational device based on data stored in its own data storage means; each unit controller further comprising data control means connected to said data storage means and all other unit controllers via communication means for renewing the working unit operational status data stored in said storage means with the newest data about the operational status at all of the working units including its own working unit.

The method comprising the step of storing data about the operational status of all the working units in the data storage means of each of the unit controllers; and,
controlling the corresponding operational device based on the working unit operational status data stored in said storage means.

The method being characterised by further comprising the step of renewing the working unit operational status data stored in the data storage means of each of the unit controllers with the newest operational status data, every time any one of all the working units changes its operational status, whereby all the unit controllers always have the newest working unit operational status data in common. Furthermore there is provided an apparatus for controlling a manufacturing system, the manufacturing system including a plurality of working units, each of which has an operational device for performing a given machining work, the apparatus including a plurality of unit controllers which correspond to the respective working units, and each of which controls the corresponding operational device of its own working unit, and communication means connected to all the unit controllers,
the apparatus being characterised in that each of the unit controllers comprises:
storage means for storing data about the operational status of all the working units including its own working unit;
data control means connected to said storage means and all the other unit controllers via communication means, for renewing the working unit operational status data stored in said storage means with the newest data about the operational status of all of the working units including its own working unit, whereby all the unit controllers always have the newest working unit operational status data in common; and
drive control means connected to said storage means, for controlling the corresponding operational device based on the working unit operational status data stored in said storage means.

The invention, and preferred objects and advantages thereof, may best be understood by reference to the following description of the certain exemplifying embodiments together with the accompanying drawings.

Figs 1 through 8 show the first embodiment according to the present invention:
Fig 1 is a block diagram showing a part of control system of a transfer machine;
Fig 2 is a block diagram showing a part of a control device of the transfer machine;
Fig 3 is a plane view of the transfer machine;
Fig 4 is a front view showing display blocks of a operation panel of the transfer machine;
Fig 5 is a front view showing control blocks of the operation panel of the transfer machine;
Fig 6 is an explanatory diagram showing the control sequence of the transfer machine;
Fig 7A is a flowchart showing preparatory procedure for an operation;
Fig 7B is a flowchart showing control procedure under an automatic operation mode;
Fig 8A is a flowchart showing control procedure under an independent operation mode; and
Fig. 8B is a flowchart showing control procedure under an unit manual operation mode.

Figs. 9 and 10 show the second embodiment according to the present invention:

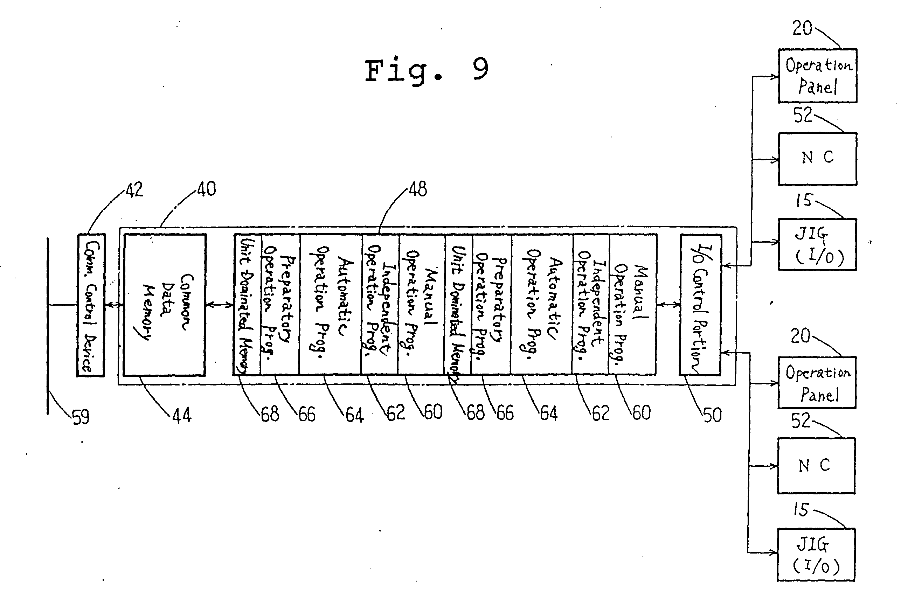

Fig. 9 is a block diagram showing a part of the control system of the transfer machine; and

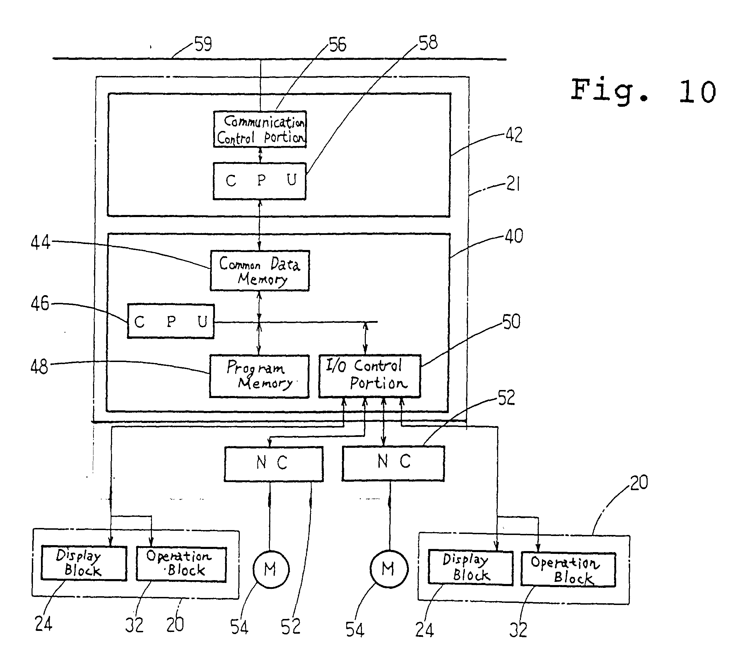

Fig. 10 is a block diagram showing a part of the control device of the transfer machine.

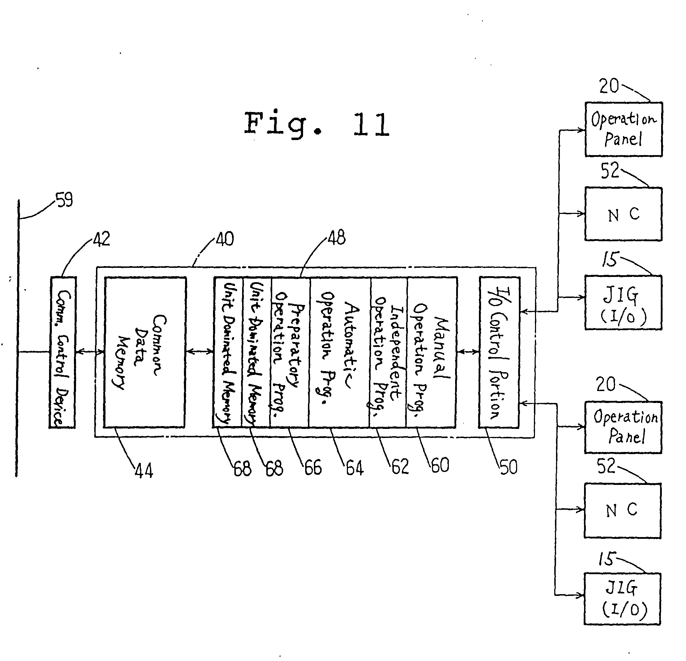

Fig. 11 is a block diagram showing a part of the control system of the transfer machine of the third embodiment according to the present invention.

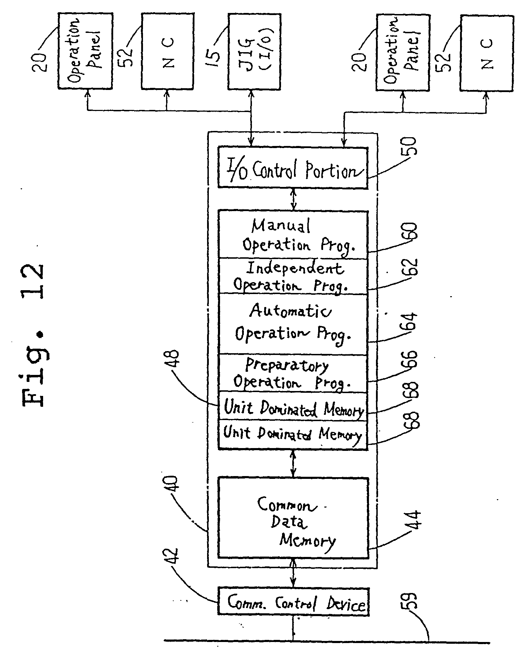

Fig. 12 is a block diagram showing a part of the control system of the transfer machine of the fourth embodiment according to the present invention.

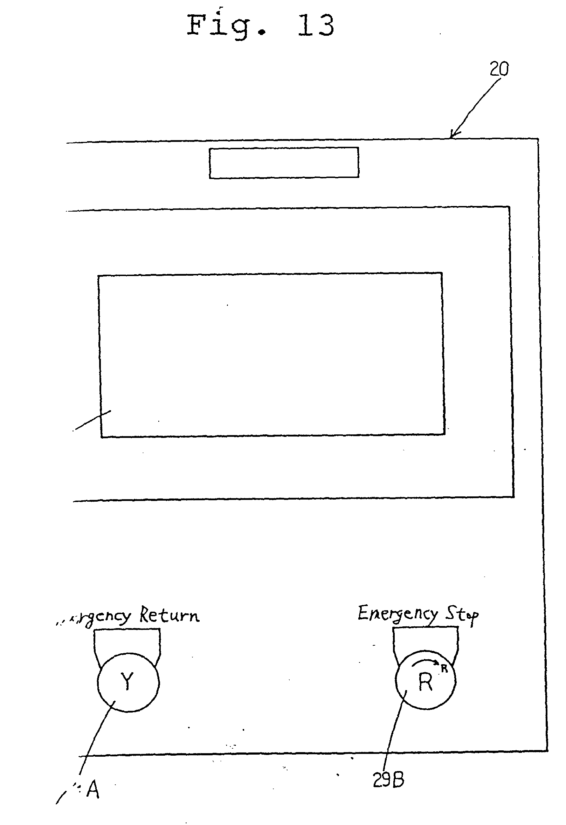

Figs. 13 through the 19 show the fifth embodiment according to the present invention:
Fig. 13 is a front view showing an operation panel of the transfer machine;

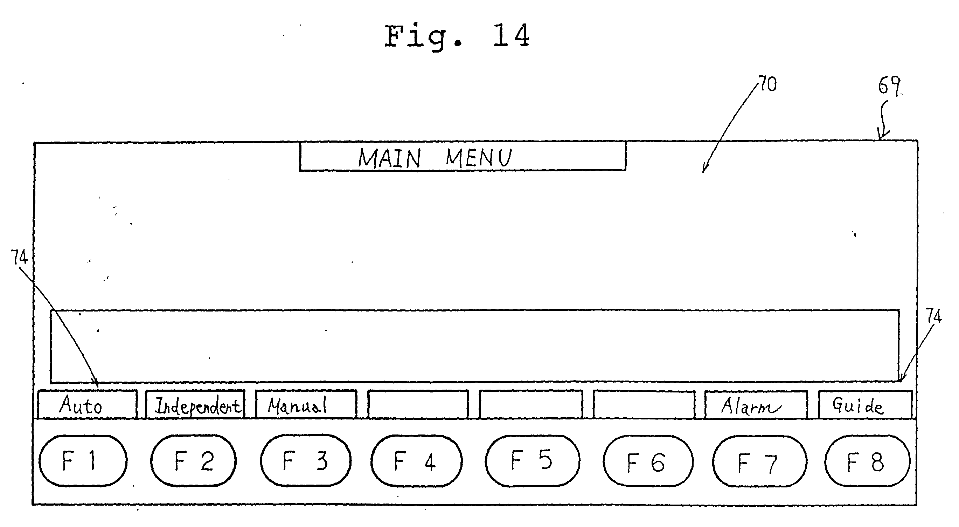

Fig. 14 is a front view of a display device of the operation panel, and shows a picture for menu;

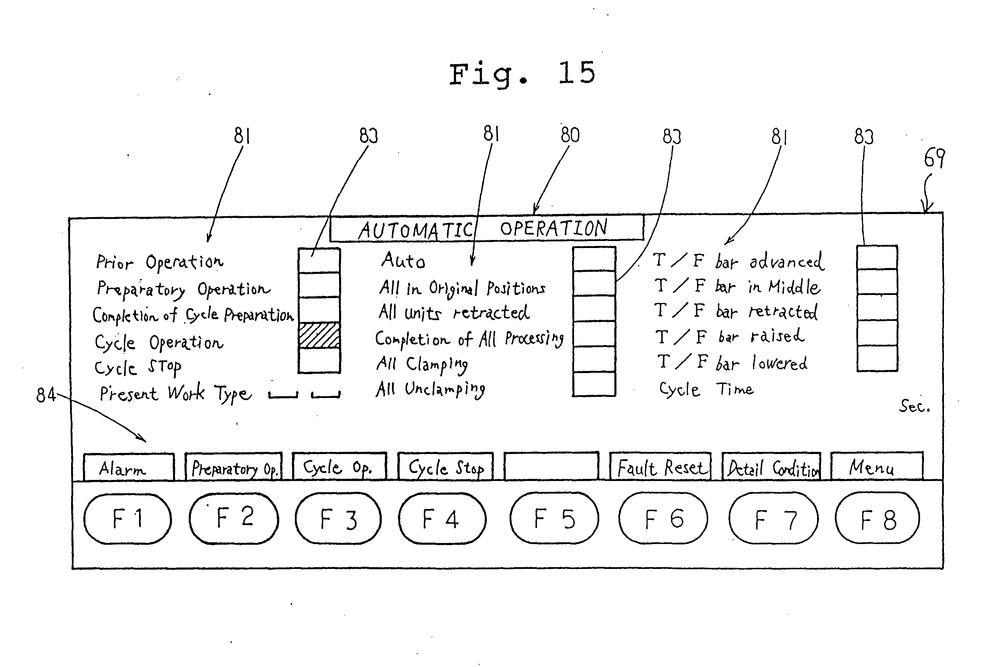

Fig. 15 is a front view of the display device of the operation panel, and shows a picture in the automatic operation mode;

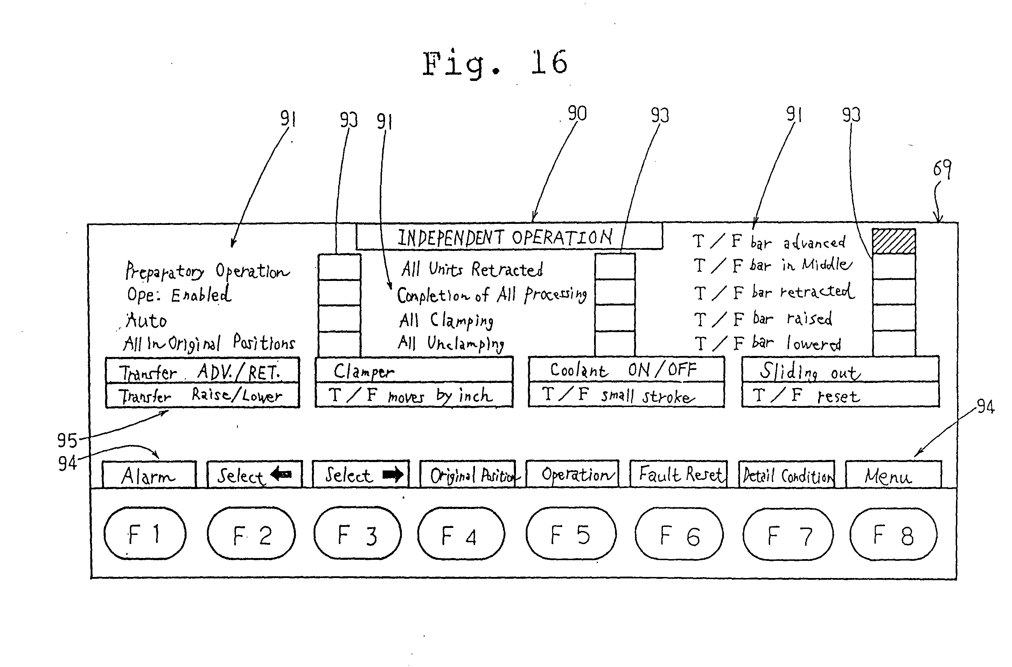

Fig. 16 is a front view of the display device of the operation panel, and shows a picture in the independent operation mode;

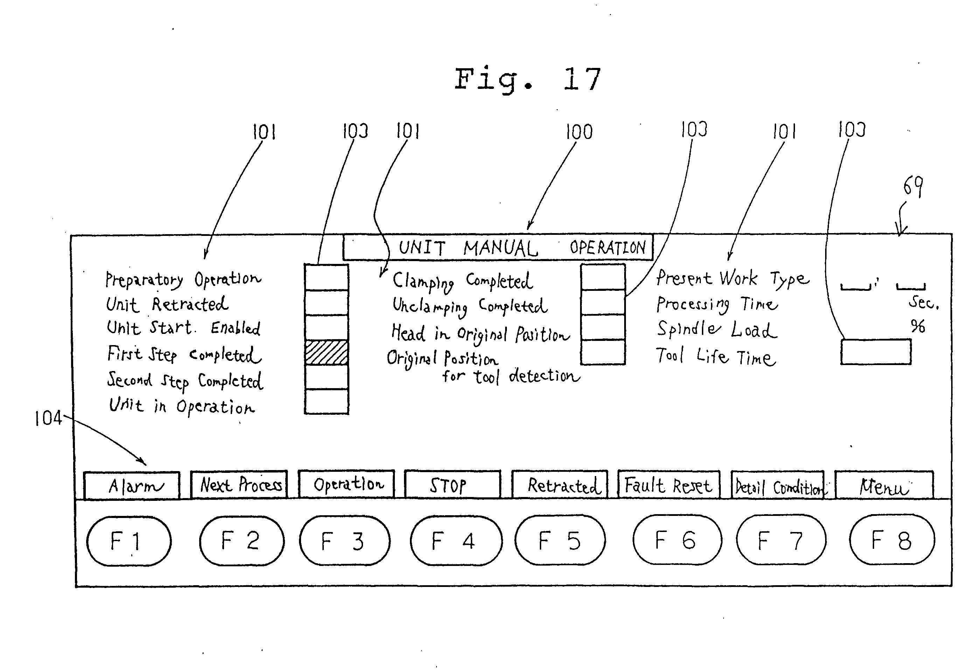

Fig. 17 is a front view of the display device of the operation panel, and shows a picture in the unit manual operation mode;

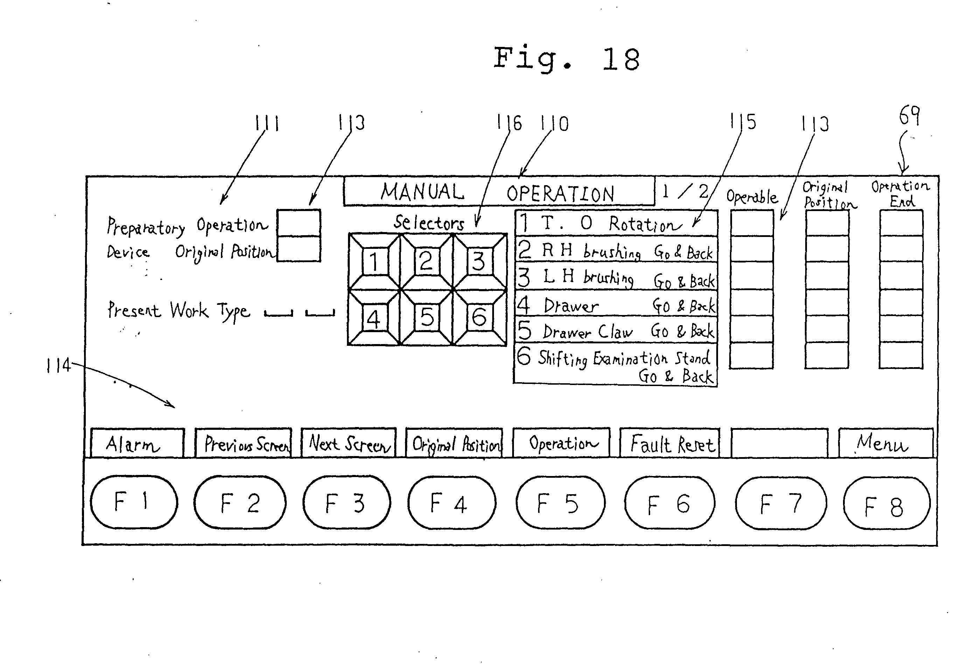

Fig. 18 is a front view of the display device of the operation panel, and shows a picture at the time of the manual control; and

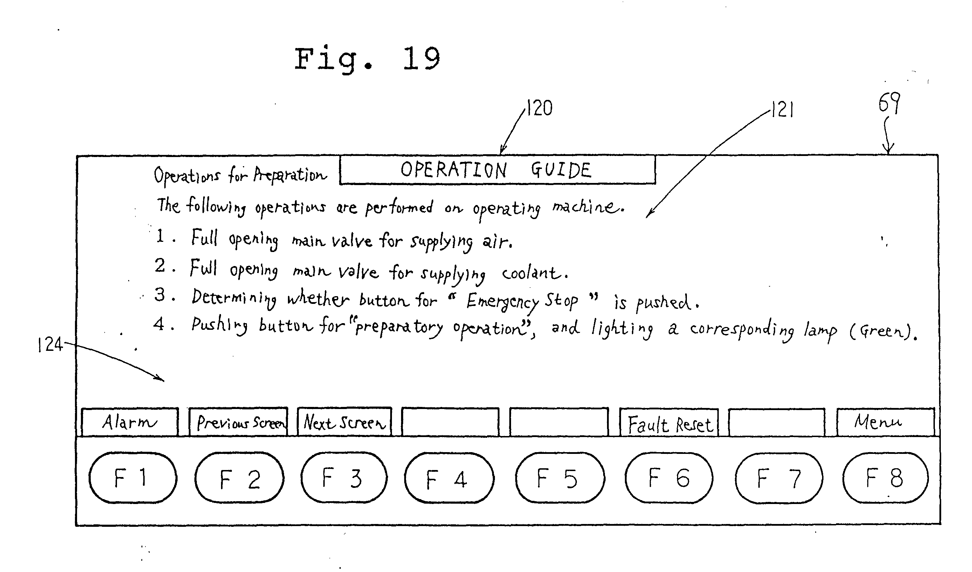

Fig. 19 is a front view of the display device of the operation panel, and shows a picture for operational guides.

The first through fifth embodiments according to the present invention will now be described referring to the accompanying drawings.

### First Embodiment

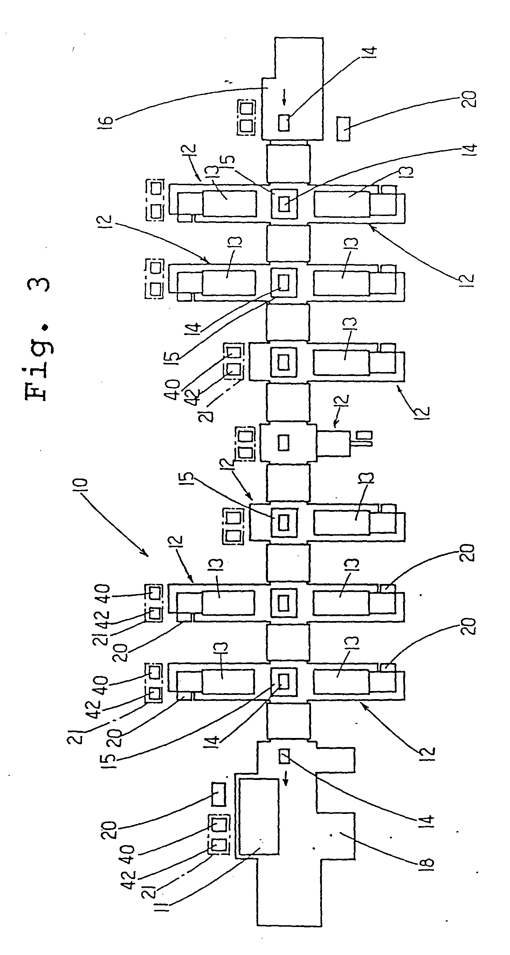

A production system control apparatus according to the first embodiment is employed as a transfer machine 10. As shown in Fig. 3, a plurality of machining units 12 are arranged in a line along the transport direction of a workpiece 14 (right to left direction in Fig. 3). Each one of the machining units 12 has a predetermined respective function which is suitable to one of the steps among a sequential operating process. Each of them (12) includes one or two machining device 13 as an operational device or tool, which corresponds to the respective station, and at least one jig 15 for clamping the workpiece 14.

A loading unit 16 is disposed at the leading portion of the transfer machine 10, for feeding and putting the workpiece 14 onto the transfer machine 10. An unloading unit 18 is provided at the trailing portion of the transfer machine 10, for unloading the machined workpiece 14 out of the transfer machine 10. A transfer mechanism including at least one transfer bar (not shown) is provided between the loading unit 16 and the unloading unit 18. The workpiece 14 is shifted from one process station to the adjacent station, step by step, due to the sequential motion of the transfer bar.

According to this embodiment, a transfer device 11 is provided as one of working units. Each of the transfer device 11, machining units 12, loading unit 16 and unloading unit 18 (all of those units and devices are installed as working units) includes a operation panel 20 for instructing the various operations including an initiating and halting the device, and a control circuit device 21 which includes various internal circuits.

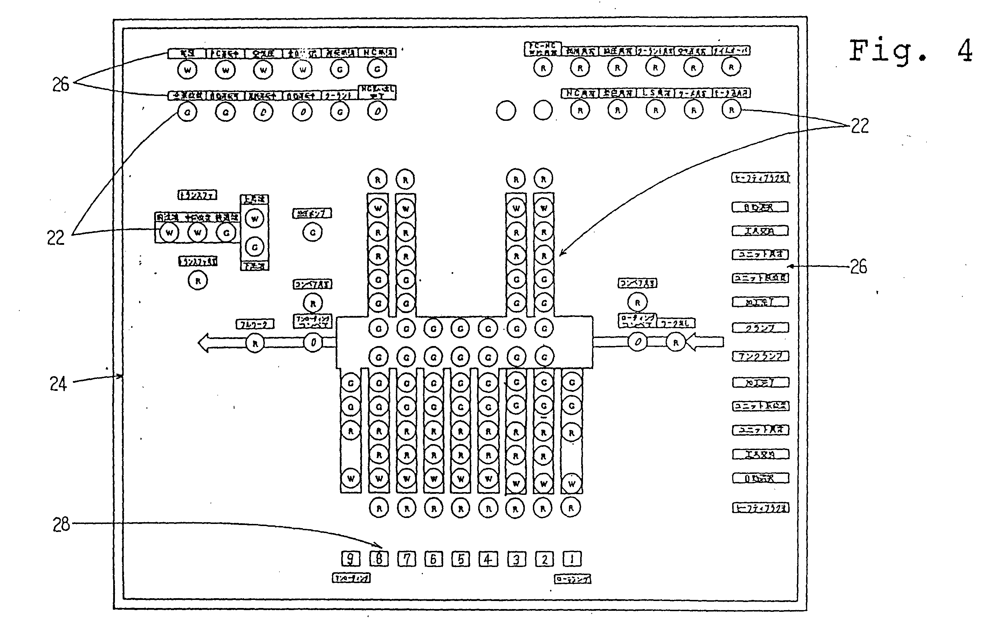

Each one of the operation panels 20 includes a display block 24 as shown in Fig. 4. The display block 24 includes multiple lights 22 which indicates the operational condition of the corresponding unit. The display block 24 further includes message portions 26, each of which indicates the meaning of the respective illuminated light 22, and display portions 28, each of which indicates the number of the respective stations of the transfer machine 10. The lights 22 and the messages 26 as shown in Fig. 4 can indicate the entire operational conditions of the respective machining units 12, the loading unit 16 and the unloading unit 18 of the transfer machine 10. These lights 22 and message portions 26 may be provided at each of the operation panel 20 of the units. Or, each one of the units may be provided with the lights and/or the message portions which indicate only the conditions necessary for its own.

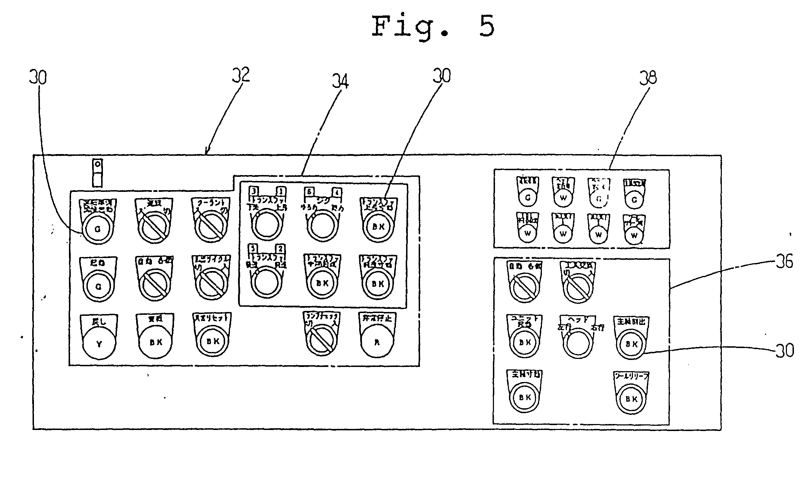

Each of the operation panels includes a operation block 32 as shown in Fig. 5. The operation block 32 includes multiple buttons or switches 30 to be selected by an operator for the purpose of instructing the initiation of the various operations such as the transfer movement and machining operation. The operation block 32 further includes a plurality of common buttons 34 for giving a common instruction to the transfer machine 10, and a plurality of individual buttons 36 for individually operating the corresponding unit. A plurality of indicating lights 38 are provided on each one of the operation panels 20. The lights 38 correspond to the respective individual buttons 36. The main body of the operation block 32 and the common buttons 34 are standard to each unit. The individual buttons 36 and indicating lights 38 of each unit differ from those of the other units. Each unit can include only the necessary common buttons 34 therefor.

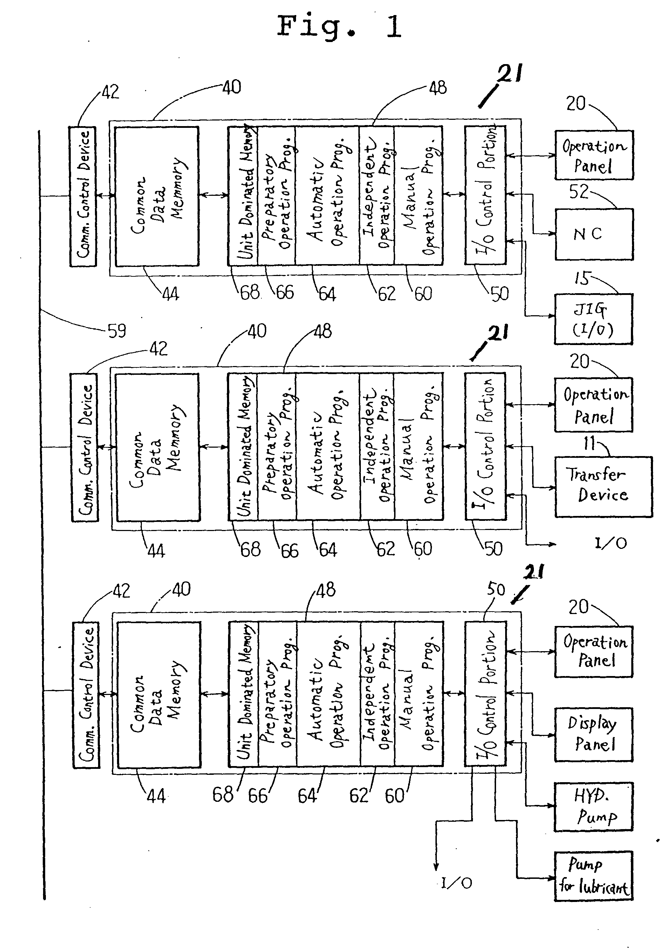

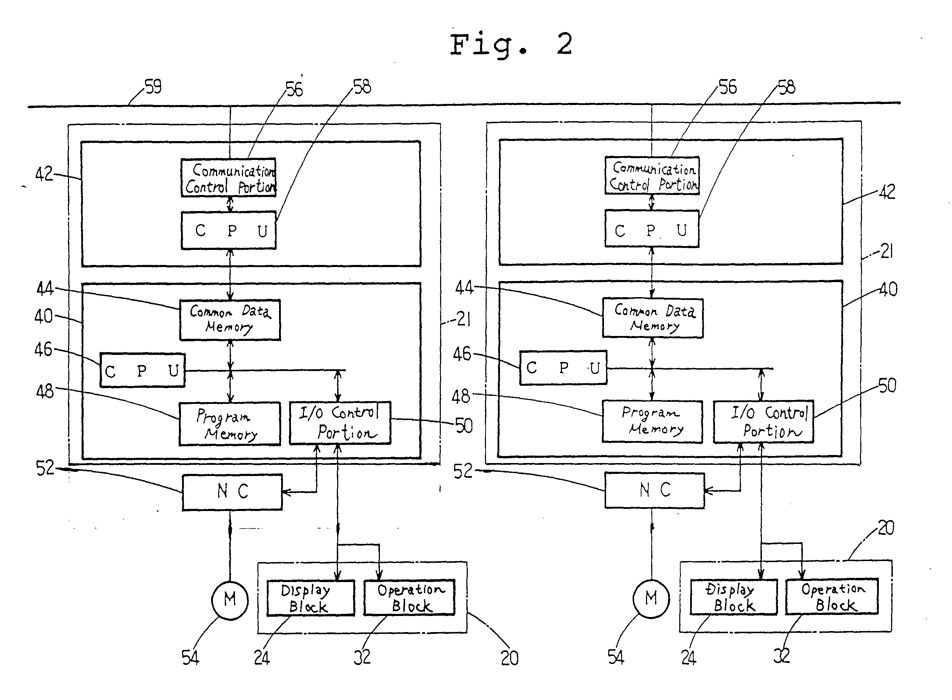

As shown in Fig. 2, the control circuit device 21 of each unit includes a programmable controller 40 for controlling the corresponding working unit, and a communication control device 42 for use in communicating unit status information between the other working units and it. The programmable controller 40 includes a central processing unit (CPU) 46, re-writable common data memory 44, and a program memory 48 which stores the program for controlling the operational procedure of the working unit. The memories 44 and 48 are generally formed by random access memories (RAM).

The programmable controller 40 each includes an I/O controller 50, which connects its programmable controller to external devices. In the case that the machining unit 12 is as a working unit, the programmable controller 40 of the machining unit 12 is connected to a NC controller 52 via the I/O controller 50, so as to control a feed motor 54. Further, the programmable controller 40 is connected to the display block 24 via the I/O controller 50, and controls the display block 24 so that it indicates the various operational conditions of the transfer machine.

Furthermore, the programmable controller 40 is connected to the operation block 32 via the I/O controller 50, and controls the operational devices or tools (such as the NC controller 52, the jig 15 and the transfer device 11) in response to the setting of the respective buttons 30. The programmable controller 40 controls indications in the display block 24, too. At this time, the unit status information of the working unit, which is controlled by the programmable controller 40, is written into the common data memory 44 together with the status information of the other working units.

Each one of the communication control devices 42 includes a communication control portion 56 which mutually transmits and receives the unit status information between the other working units, and a CPU 58 which controls the mutual information communication between the communication control portion 56 and the common data memory 44. The communication control device 42 loads the unit status information which are sent from the communication control portions 56 of the other working units, through a communication line 59, according to the predetermined communication standard. The communication control device 42 allows the common data memory 44 to replace the old unit status information or data stored therein with the new one. In addition, the control device 42 outputs the newest status information concerning its own working unit.

As shown in Fig. 1, each program memory 48 of the programmable controllers 40 stores a manual operation program 60, an independent operation program 62, and an automatic operation program 64, which are common to each controller 40. The manual operation program 60 is for independently operating the individual operational unit. The independent operation program 62 is for operating a specific working unit with a predetermined operation, or for operating all the working units with common predetermined operations. The automatic operation program 64 is for operating the entire working units with a cycle operation (i.e., repeatedly executing the same operation). According to the automatic operation program 64, its own working unit is controlled simultaneously with the other working units, such that the transfer machine 10 can continuously perform the sequential machining operation.

Further, the program memory 48 each stores a preparatory operation program for preparing the working units. Each one of the program memories 48 of the respective working units includes a memory or region 68 only for its own unit (hereinafter referring to as "unit dominated memory 68"). The unit dominated memory 68 is for storing only the unit status information or data which is picked up from the common data memory 44 and is necessary for the working unit.

Each one of the common data memory 44 stores the unit status information or data about all the working units including its own working unit. These unit status information or data are always updated with the newest information sent from each of the working units, by means of the communication control unit 56. As a result, all the common data memory 44 of the programmable controllers 40 always stores the common unit status information about all the working units of the transfer machine.

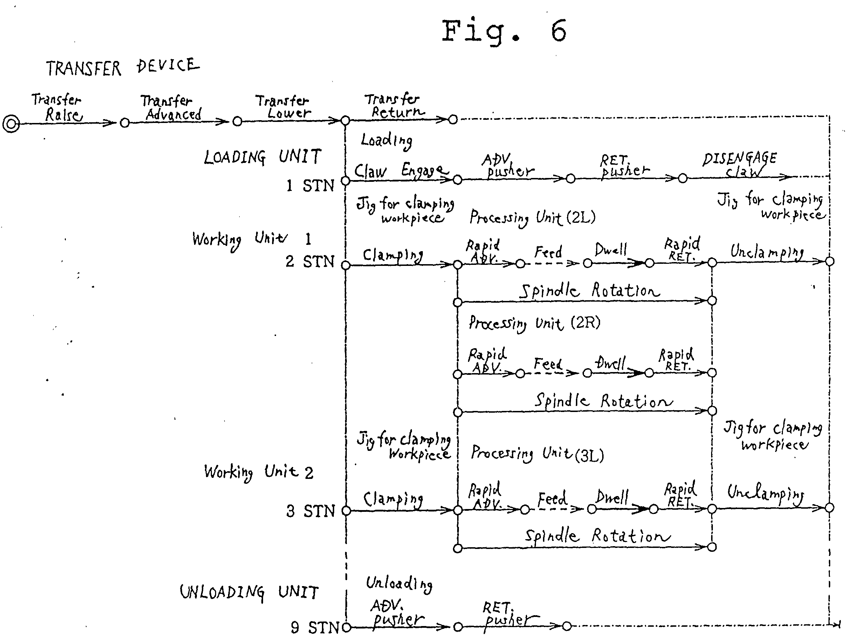

The operation of the transfer machine according to this embodiment will now be described. The transfer device 11 moves along the transfer machine 10, like the well-known conventional machine, as shown in Fig. 6. The workpiece 14 is transferred from one station to the other station, due to the actions of raising, forwarding and lowering of the transfer bar.

When the workpiece 14 is transferred toward the next station by single pitch by means of the transfer bar, and the transfer bar is lowered, a claw of the loading unit 16, which is engagable with the workpiece, rotates in one direction in order to load a new workpiece 14 onto the end of the transfer bar. At next step, the new workpiece 14 is pushed toward the transfer bar by means of a pusher. Then, the pusher is retracted, and the hook is reversely rotated. Thus, the loading unit 16 is ready for loading a new workpiece 14.

As shown in Fig. 6, each of the jigs 15 of the respective machining units 12 clamps the newly provided workpiece 14 synchronously with the lowering of the transfer bar, in order to perform the predetermined machining process on it. Then, the machining device 13 is forwardly moved by the rotation of the feed motor 54, while a main shaft motor provided in each machining device 13 is rotating. After the machining device 13 performed the machining operation on the workpiece 14, the feed motor 54 causes the machining device to be returned to an original position. After the main shaft motor is stopped, the clamping position of the jig 15 is released. Further, the workpiece 14 processed with the sequential machining operations is sent out from the transfer machine 10 by means of the operational device or tool such as the pusher at the unloading unit 18, at the same time when the transfer bar is lowering. The lights 22 of the display block 24 indicate the operational states of the individual working units at the sequential machining steps.

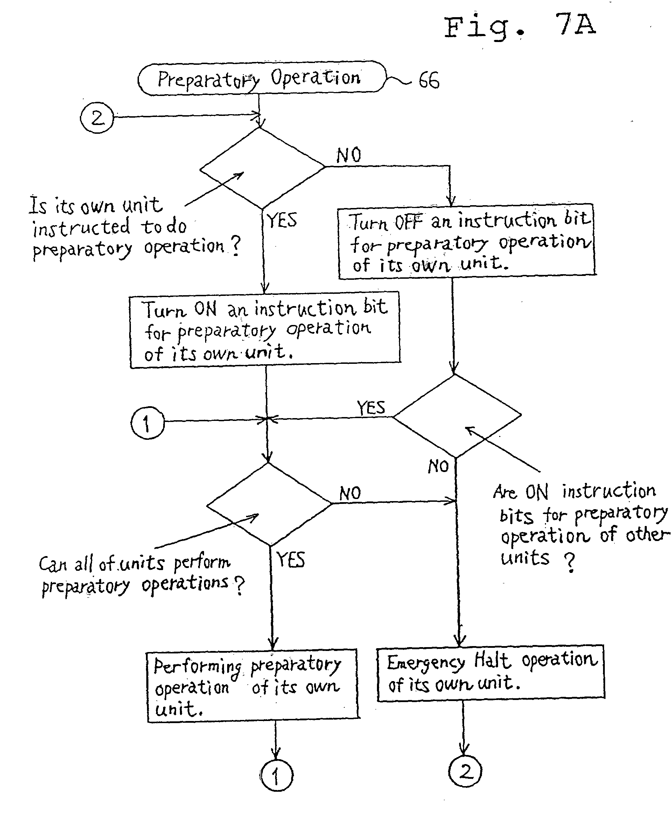

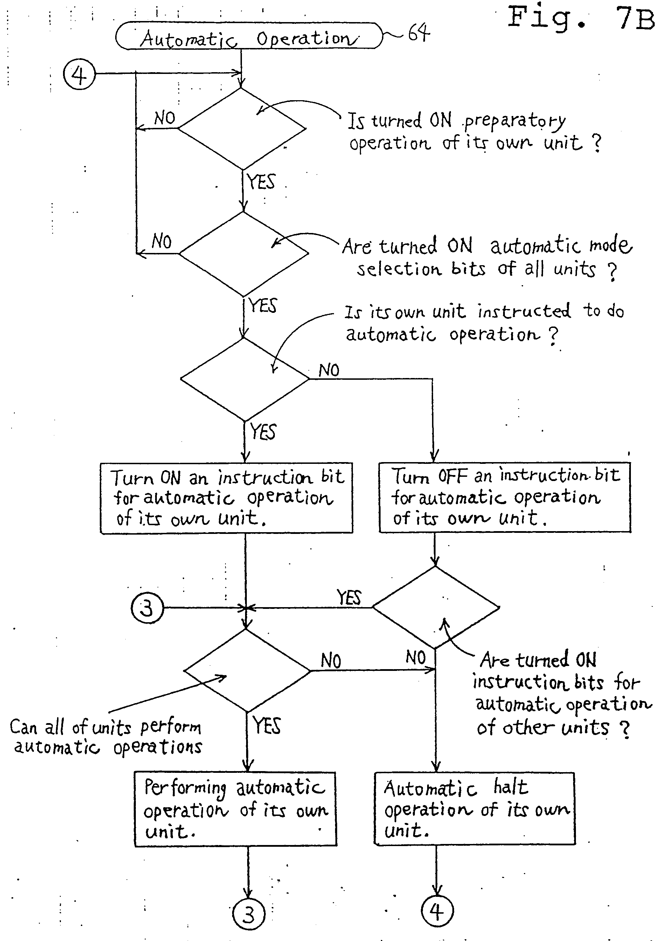

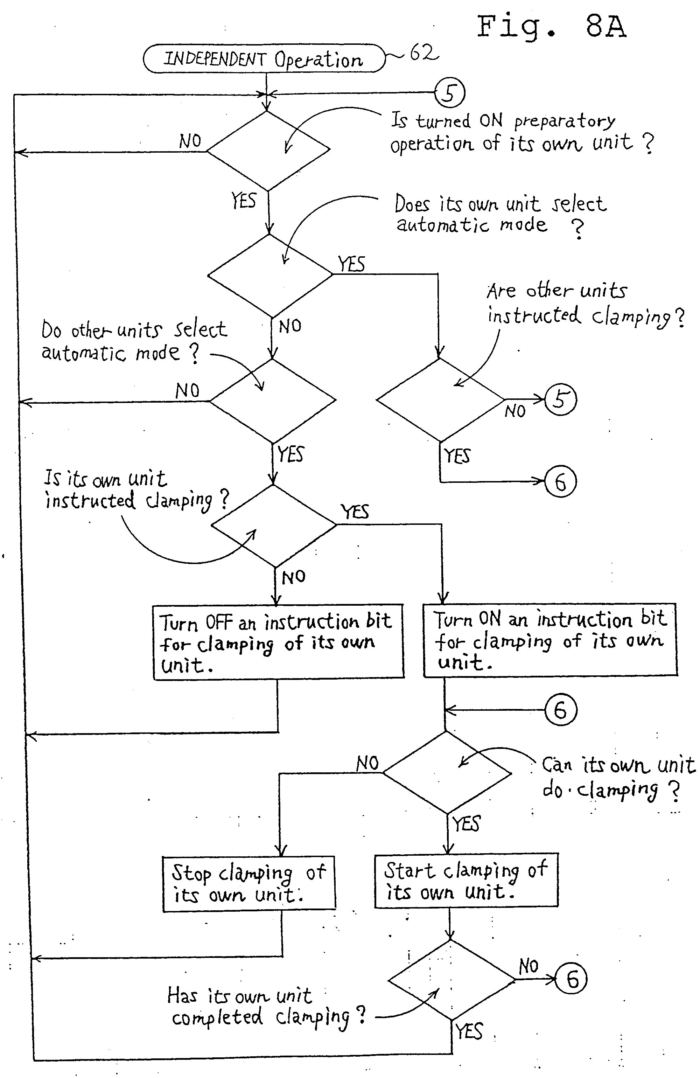

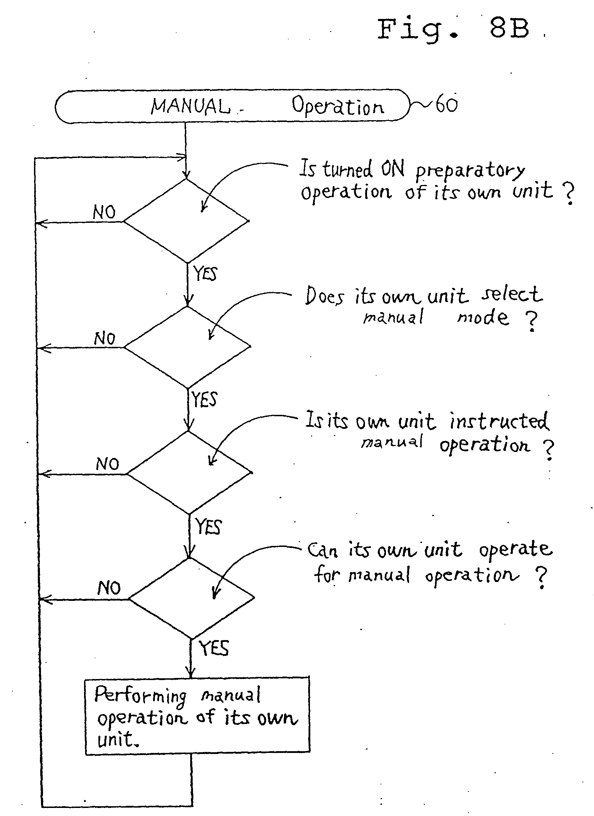

The control sequence of the transfer machine will now be described referring to Fig. 1, and the flowcharts in Figs. 7A, 7B, 8A and 8B. All the matters described hereinafter (e.g., determination and setting) are carried out based on the unit status information or data stored in each of the common data memories 44 of the working units. The selections or instructions described below about each working unit are originated from the operations in each control panel.

When an operator pushes an operational preparation button among the common buttons 34 in any one of the operation panels 20 of the working units, the execution of the preparatory operation program 66 is started at the working unit. According to the preparatory operation program 66 as shown in Fig. 7A, the CPU 46 determines whether or not the instruction to start preparing for the operation is initiated at its own working unit. When the operational preparation is instructed, the CPU 46 turns ON a bit data of the common data memory 44 of the working unit, which is concerned with the operational preparation.

Further, the bits data, which are concerned with the preparation for the operation, in the common data memories 44 of the other working units, are also turned ON, in response to the communication through the communication line 59. As a result, the preparatory operation program 66 is started executing in each one of the other working units. Therefore, each one of the working units starts preparing for the operation. Unless the emergency stop instruction is existed in each working unit, the transfer machine can be operated with any one mode among the automatic operation mode, the independent operation mode or the manual operation mode, as described afterward. On the other hand, when the emergency stop instruction is initiated in any one of the working units, the entire working units execute the emergency stop operations.

According to the automatic operation program 64 as shown in Fig. 7B, the CPU 46 in each the working unit determines whether or not all the working units including its own working unit have selected the automatic operation mode, on the basis of the unit status information stored in the common data memory 44. When all the working units select the automatic operation mode, the CPU 46 determines whether or not its own working unit holds an automatic operation instruction. When the instruction is existed, the CPU 46 turns ON the automatic operation indication bit in its own common data memory 44.

When the automatic operation instruction is not existed in its respective working unit, the CPU 46 turns OFF the automatic operation indication bit in its own common data memory 44. The CPU 46 determines whether or not the other working units hold the automatic operation instructions, according to the unit status information stored in its own common data memory 44. When the automatic operation instruction is existed in any one of the working units, the CPU 46 determines whether or not the entire working units can operate the automatic operation mode. When the CPU 46 determines YES, its own common data memory 44 stores the automatic operation bit data. In addition, the common data memories 44 of the other working units also stores the automatic operation bit data.

As a result, the automatic operation mode is set in each one of the entire working units, such that the working unit each starts executing the automatic operation. When any one of the working units does not hold the automatic operation instruction, and when any one of the working units are not ready for the automatic operation, each one of the working units executes the halt operation so as to halt the automatic operation.

According to the independent operation program 62 as shown in Fig. 8A, the CPU 46 determines which of the automatic operation mode and the manual operation mode is selected, according to the setting condition of the operation panel 20 in the working unit. When the manual operation mode is selected, the CPU 46 determines whether or not the other working units have selected the automatic operation mode. When all the other working units select the automatic operation mode, the CPU 46 determines whether or not a given independent operation (e.g., clamping) is instructed. The CPU 46 turns ON or OFF the bit in its common data memory 44, in accordance with the determination whether the instruction is existed or not.

When the independent operation is instructed, the CPU 46 determines whether or not the its own working unit is able to operate a expected operation for carrying out the independent operation mode. When the determination is YES, the CPU gives bit data, which indicates its own working unit is in the independent operation mode, to the common data memory 44. Further, the unit status information, which indicates the working unit is in the independent operation mode, is given to all the common data memories 44 of the entire working units. Then, the working unit starts executing the predetermined independent operation, and the other working units also start executing the respective independent operations. When the working unit can not execute its own independent operation, the independent operational mode is suspended.

When the working unit selects the automatic operation mode, the CPU 46 determines whether or not the independent operation instruction originated from any one of the other working units is received. When the independent operation instruction is existed, the CPU 46 determines whether or not its own working unit is able to execute the independent operation. Based on the determination result, the working unit starts executing the independent operation, and the other working units also start executing the independent operations, respectively.

According to the manual operation program 60 shown in Fig. 8B, the CPU 46 determines whether or not its own working unit selects the manual operation mode. When the manual operation mode is selected, the CPU 46 further determines whether or not the manual operation instruction is instructed to its own working unit. When the independent operation is instructed, the working unit executes the manual operation.

Each one of the programmable controllers 40 of the working units has a similar structure and stores a similar control program. Accordingly, any one of the working units may be provided with a operation instruction device for transmitting a certain unit status information in order to instruct an another working unit to execute an expected operation. The operation instruction device transmits some commands as to instructing the transfer bar to execute a predetermined operation, controlling the hydraulic pressure in a hydraulic system, and unloading workpieces by means of the unloading unit 18, as the unit status information.

In response to the input of such command, the programmable controller 40 each determines whether or not the command is directed to its own unit. If so, the controller 40 controls the corresponding operational device or tool to execute the expected operation according to the command. The certain working unit can be selected to execute the expected operation, based on the operation at any one of the operation panels 20. This improves the work efficiency and increases the expandability of the system.

According to the transfer machine of this embodiment, each of working units includes the programmable controller 40 and the communication control device 42 for performing the respective operations. Therefore, each working unit can achieve the instructed operation based on the self determination, with considering the unit status information relating to the other working units which are stored in its own common data memory 44. As a result, the cycle time of the transfer machine is significantly shortened, and the machining time for the workpiece is significantly reduced.

According to the conventional collective control system employing the conventional main control panel, the unit status information about the entire working units are once gathered in a memory of the main control panel. A control device in the main control panel makes determinations based on the gathered information. Then, the unit status information is sent to each one of the unit control panels. Accordingly, the conventional system requires greatly longer periods of communication time and determination time, for gathering the unit status information of the individual units, making determinations based on them, and transmitting the determination results to the entire working units.

According to this embodiment, each one of the working units always receives the unit status information from the other working units except for its own working unit, and can independently determine the various conditions. In other words, the invented system loses only data transmission time which it takes for the entire working units to receive the newest unit status information. Therefore, the required total time for communication and determination by the transfer machine according to this embodiment becomes approximately one half of the time required by the conventional system.

### Second Embodiment

The second embodiment according to the present invention will now be described referring to Figs. 9 and 10. The elements corresponding to those in the first embodiment are given similar numerical reference numbers.

Two adjacent working units are controlled by a single programmable controller 40, in the second embodiment. Therefore, the communication control device 42 is also commonly utilized similar to the controller 40. However, the program memory 48 of the controller 40 includes two unit dominated memories 68 and two sets of the programs for the individual working units, such as the manual operation programs 60, the independent operation programs 62, the automatic operation programs 64 and the preparatory operation programs 66. The CPU 46 is connected to two working units via a single I/O control portion 50, so as to control them.

The single controller 40 can individually control multiple working units, within the control ability of the CPU 46. According to the second embodiment, each one of the working units are individually controlled in the distributed control manner, based on the information stored in the common data memories 44, as in the first embodiment. In such control manner, the programmable controller 40 are efficiently utilized. The cost for planning (or setting up) and maintenance of a manufacturing system can be reduced. Further, the land or space that the system should be built in is utilized without wasting it. In addition, the number of the communication control devices 42 can reduced, thus improving the efficiency of the data communication.

### Third Embodiment

The third embodiment according to the present invention will now be described referring to Fig. 11. The elements corresponding to those in the first embodiment are given similar numerical reference numbers.

Two adjacent working units are controlled by means of a single programmable controller 40, similar to the second embodiment. The communication control device 42, and the CPU and the common data memory 44 of the programmable controller 40 are commonly utilized. Further, the two working units commonly utilize one manual operation program 60, independent operation program 62, automatic operation program 64 and preparatory operation program 66 stored in the program memory 48. However, two unit dominated memories 68 corresponding to the respective working units are provided in the program memory 48. The controller 40 includes a single I/O control portion 50 which is connected to two working units.

According to the third embodiment, each one of the working units are individually controlled in the distributed control manner, based on the information stored in the common data memories 44, as in the first embodiment. When the this structure is employed, the program memory 48 is efficiently utilized, in addition to the similar advantages and efficiency of the second embodiment. The arrangement manner of this third embodiment is beneficial to a transfer machine which includes a lot of working units which machine workpieces, while the workpiece each is consecutively shifted to the successive machining station, following the approximately similar machining program.

### Fourth Embodiment

The fourth embodiment of the present invention will now be described referring to Fig. 12. The elements corresponding to those in the first embodiment are given similar numerical reference numbers.

A single programmable controller 40 controls two working units, as in the second and third embodiments. Therefore, the communication control device 42, and the CPU and the common data memory 44 of the programmable controller 40 are commonly utilized. However, in this embodiment, two adjacent working units facing to each other commonly utilize a single jig 15. Each one of the working units includes a NC controller 52. The two NC controllers 52 are arranged to face to each other.

Each NC controller 52 commonly utilize the manual operation program 60, independent operation program 62, automatic operation program 64 and preparatory operation program 66 stored in the program memory 48 of the programmable controller 40. Two unit dominated memories 68 corresponding to the respective NC controllers 52 are provided in the program memory 48. Further, the controller 40 includes a single I/O controller 50 which is connected with two working units. According to the fourth embodiment, each one of the working units including the NC controllers 52 is individually controlled in the distributed control manner, based on the information stored in the common data memories 44, as in the first embodiment.

### Fifth Embodiment

The fifth embodiment of the present invention will now be described referring to Figs. 13 through 19. The elements corresponding to those in the first embodiment are given similar numerical reference numbers.

The fifth embodiment relates to the transfer machine, similar to the first embodiment. As shown in Fig. 13, the unit operation panel 20 includes a display device 69 such as a CRT and a liquid-crystal panel, and a display control device (not shown) for controlling the screen display indicated by the display device 69.

The display device 69 includes function keys F1 through F8, which are touch switches disposed in the lower area of the display screen, and an emergency return button 29A and an emergency stop button 29B formed by pressing buttons. The function keys F1 through F8 are to control the various menus displayed in the screen of the display device 69, which will be described afterward. The emergency return button 29A is to drive each of working units to a retracted position, when the cycle operation is executed. The emergency stop button 29B is to stop the operation of the manufacturing system as well as to suspend the entire function of every devices including the hydraulic device.

The screen display of the display device 69 is controlled by the display control device. Fig. 14 shows a menu display or screen 70 of the display device 69. The menu display 70 is displaying the operation menus which the operator requires. Figs. 15 through 19 show the display or screen selectable by the operator and the changeable display contents.

Fig. 15 shows a display or screen 80 utilized when the transfer machine 10 is to be operated with the automatic operation. The display 80 is hereinafter referred to as an automatic operation mode display 80. Fig. 16 shows a display or screen 90 utilized when the transfer machine 10 is to be operated with the independent operation mode, in which various operations is grouped in accordance with the operation contents. The display 90 is hereinafter referred to as an independent operation mode display 90. Fig. 17 shows a display or screen 100 utilized when the transfer machine 10 is to be operated with the unit manual operation mode to enable each one of the working units to be independently operated. The display 100 is hereinafter referred to as an unit manual operation mode display 100. Fig. 18 shows a display or screen 110 utilized when the unloading unit 18 is to be independently operated. The display 110 is hereinafter referred to as a single operation mode display 110. Fig. 19 shows an operation guide display 120.

The menu display 70 will be switched to another display by pressing any one of the function keys (e.g., F1 through F3), which correspond to the indications at the function display section 74 of the menu display 70. The content of each menu will now be described.

As shown in Fig. 15, the automatic operation mode display 80 for the cycle operation includes message sections 81 and display sections 83. The message sections 81 describes the various conditions of the transfer machine 10 when the transfer machine 10 is in the cycle operation, or at just before or after the cycle operation. The display sections 83 become luminous to indicate it if the transfer machine 10 is in the condition which corresponds to one of the statements in the message sections 81. There is a function display section 84 disposed at the lower portion of the display screen. The function display section 84 indicates the operation menu of the automatic operation mode, which corresponds to each one of the function keys F1 through F8.

In this case, when the operator presses the function key F1, a warning alarm is activated. When the function key F2 is pressed, the transfer machine 10 starts the preparation operation, and a hydraulic pump and a pump for lubricant are activated. When the function key F3 is pressed, the cycle operation is initiated for performing a continuous sequence processing. When the function key F4 is pressed, the cycle operation is stopped. As described above, the function keys F3 and F4 form operational means for the cycle operation. When the function key F6 is pressed, the transfer machine 10, of which operation has been stopped by an abnormal condition, will be reset to an initial condition. When the function key F7 is pressed, the current condition will be displayed on the screen of the display device 69 in detail. When the function key F8 is pressed, the menu display 70 will be called back.

In the independent operation mode, part of the sequential operation of the transfer machine 10 will be executed as the group of some working units or each one of them with holding mutual relationships. As shown in Fig. 16, the independent operation mode display 90 for the independent operation includes display sections 93 and message sections 81, which describe the various conditions of the transfer machine 10 at the execution of the independent operation, or at the just before or after the independent operation execution. A function display section 94 is disposed at the lower portion of the display screen, and indicates the operation menu of the independent operation mode, which corresponds to each one of the function keys F1 through F8. Further, an independent operation display section 95 is disposed at the center of the display, and indicates the contents of independent operations in the independent operation mode. The programmable controller 40 executes a specific independent operation indicated by a cursor on the screen.

When the function key F1 is pressed by the operator, a warning alarm is activated. When the function keys F2 or F3 is pressed, the cursor in the independent operation display section 95 will be shifted in the arrow direction corresponding to the selected function key. When the cursor reaches the right end of the display, the cursor will shift from the upper right corner to the lower left corner. When the cursor reaches the left end, the cursor will shift from the lower left corner to the upper right corner. When the function key F4 is pressed, the operation is forced to return to the selected separate operation by the cursor, and each one of the operational tools or devices are returned to their respective initial positions (original positions) of the independent operation. When the function key F5 is pressed, on the contrary, the independent operation selected by the cursor will be initiated. The functions corresponding to the respective function keys F6, F7 and F8 are similar to those in the automatic operation mode display 80.

In the unit manual operation mode, each one of the machining units 12 independently operates the required operation. As shown in Fig. 17, the unit manual operation mode display 100 includes display sections 103 and message sections 101, which describe the various condition of the transfer machine 10 when the transfer machine 10 is in unit manual operation, or just before or after it. A function display section 104 is formed at the lower portion of the screen, and indicates the operation menu of the unit manual operation mode, which corresponds to each one of the function keys F1 through F8. The programmable controller 40 controls the operations in the unit manual operation mode.

When the function key F2 is pressed by the operator, the control process advances to the successive step of the unit manual operation. When the function key F3 is pressed, the unit manual operation is initiated. When the function key F4 is pressed, the unit manual operation is stopped. When the function key F5 is pressed, the machining device 13 of the machining unit 12 will return an original position. The functions corresponding to the respective function keys F6, F7 and F8 are similar to those of the automatic operation mode display 80.

The unit manual operation mode display can be changed to the manual operation mode display 110 for the unloading unit 18, as shown in Fig. 18. The manual operation mode display 110 includes display sections 113 and message sections 111, which indicates the various operational menu in the manual operation mode. Select buttons 116 and a function message section 115 are displayed at the central portion of the screen. The select buttons 116 are touch switches for selecting the operation contents. The function message section 115 indicates the operation contents which correspond to the select buttons 116.

A function display section 114 at the lower section of the screen indicates the operational contents of the unloading unit 18, which correspond to each one of the function keys F1 through F8. The screen will be changed to the previous one by pressing the function key F2. The screen will be changed to the successive one by pressing the function key F3. When the function key F4 is pressed, the unit 18 will return to its original position. When the function key 5 is pressed, the unit 18 is initiated. The functions corresponding to the respective function keys F1, F6 and F8 are similar to those of the automatic operation mode display 80.

The operation guide display 120 as shown in Fig. 19 includes a message section 121 and a function display section 124 which corresponds to the respective function keys F1 through F8. The display content will be changed to that of the previous one by pressing the function key F2, and will be changed to the successive one by pressing the function key F3. The functions corresponding to the respective function keys F1, F6 and F8 are similar to those of the automatic operation mode display 80.

The operational sequence of the transfer machine 10 according to this embodiment will now be described. At first, the menu display 70 is called out, while selecting an unit operation panel 20 to be operated among the multiple panels 20. The operator selects the desired operation from the menu display 70.

When the automatic operation mode is selected, every display screens of the display devices of all the unit operation panels 20 are switched to the automatic operation mode displays 80 for the cycle operation. Then, the operator first presses the function key F2 for preparing the system operation. The preparatory operation is required whenever any kinds of the operations is to be initiated, besides the cycle operation. After the preparatory operation is completed, when the continuous operation based on the cycle operation is desired, the operator presses the function key F3 for the cycle operation. Then, the transfer machine 10 is automatically and continuously operated to repeat the predetermined machining steps, in order to apply the workpieces with the machining process. During the cycle operation, the display sections 83 of the display device 69 always indicate the operating conditions. When the function key F4 is pressed by the operator, the cycle operation is stopped.

To execute the independent operation, "the independent operation mode" in the menu display is selected. Thus, the display screen of the display device 69 is switched to the independent operation mode display 90. After the operator selects the desired independent operation in the independent operation display section 95 by selecting the function keys F2 and/or F3, the operator presses the function key F5. Then, the transfer machine 10 executes the predetermined independent operation. When the function key F4 is pressed by the operator, each one of the operational tools or devices will be returned to the respective original positions which are predetermined in the independent operation mode. The operation conditions are always indicated in the display sections of the display device 69, while the independent operation is executed.

To execute the unit manual operation, "the unit manual operation mode" in the menu display is selected. Thus, the display screen of the display device 69 is switched to the unit manual operation mode display 100. The machining unit 12 is independently operated by selecting the function keys F2 through F4. The operating conditions are always indicated in the display sections 103 of the display device 69, while the unit manual operation is executed. The operator can independently operate the unloading unit 18, for which the manual operation mode display 110 is called out in the manual operation mode, through manipulating any one of the operation panels 20.

The transfer machine according to the fifth embodiment is controlled in the same manner as the first embodiment, and therefore achieves the advantages and effects similar to those of the first embodiment. Further, according to the fifth embodiment, the desired operation can be controlled while switching the display screen of the display device 69 of the operation panel 20. Therefore, the operation panel 20 can be downsized, and hold multiple functions therein.

Although only five embodiments of the present invention have been described herein, it should be apparent to those skilled in the art that the present invention may be embodied in many other specific forms. Particularly, it should be understood that the following modifications may be embodied according to the present invention.

Although each one of the working units according to the first embodiment includes the operation buttons which transmit an instruction to the entire working units, the necessary buttons may be selected among the operation buttons, and only the selected buttons may be installed at the individual operation panels. The lights in the display blocks or panels can be treated as the same manner as the operation buttons. An operation block for operating the entire working units with the common operations may be installed in a single operation panel, and the operation panels of the other working units may include only operation buttons for operating the respective operational tools or devices.

Although one working unit is formed with one or two machining devices and jigs in the above-described embodiments, the machining device and jig may be separated so that the separated devices can form independent working units, respectively. Further, each of two machining devices, which are facing to each other at every station, may independently form a single working unit. A single CPU can control the arbitrary number of the working units, within the ability of the CPU.

The present invention can be employed for every kind of the manufacturing system, such as a flexible transfer machine or other automatic installation device, that includes a plurality of the working units which are operated with mutual relationship.

The present examples and embodiments are to be considered as illustrative and not restrictive.

## Claims

1. A method of controlling a manufacturing system including a plurality of working units (12) each of which includes an operational device (11, 15, 20, 52) for performing a given machining work, the manufacturing system further including a plurality of unit controllers (21) which correspond to the respective working units, each of the unit controllers comprising data storage means (44) and controlling its own corresponding operational device based on data stored in its own data storage means; each unit controller further comprising data control means (42) connected to said data storage means (44) and all other unit controllers (21) via communication means (59) for renewing the working unit operational status data stored in said storage means (44) with the newest data about the operational status at all of the working units including its own working unit
the method comprising the step of storing data about the operational status of all the working units in the data storage means (44) of each of the unit controllers; and,
controlling the corresponding operational device (11, 15, 20, 52) based on the working unit operational status data stored in said storage means (44)
the method being characterised by further comprising the step of renewing the working unit operational status data stored in the data storage means (44) of each of the unit controllers with the newest operational status data, every time any one of all the working units changes its operational status, whereby all the unit controllers (21) always have the newest working unit operational status data in common.

2. The method according to claim 1, wherein some of the operational status data relates to some of all the working units which have one common unit controller, which controls the corresponding operational devices (11, 15, 20, 52).

3. An apparatus for controlling a manufacturing system, the manufacturing system including a plurality of working units (12), each of which has an operational device (11, 15, 20, 52) for performing a given machining work, the apparatus including a plurality of unit controllers (21) which correspond to the respective working units, and each of which controls the corresponding operational device of its own working unit, and communication means (59) connected to all the unit controllers (21),
the apparatus comprises in each of the unit controllers (21). Storage means (44) for storing data about the operational status of all the working units including its own working unit ;
drive control means (46, 48, 50) connected to said storage means (44), for controlling the corresponding operational device (11, 15, 20, 52) based on the working unit operational status data stored in said storage means (44).
the apparatus being characterised in that each of the unit controllers (21) comprises:
data control means (42) connected to said storage means (44) and all the other unit controllers (21) via communication means (59), for renewing the working unit operational status data stored in said storage means with the newest data about the operational status of all of the working units (12) including its own working unit, whereby all the unit controllers (21) always have the newest working unit operational status data in common.

4. The apparatus according to claim 3, wherein said storage means of each unit controller includes a data memory (44) constituted by a random access memory (RAM).

5. The apparatus according to claim 3, wherein said drive control means of each unit controller includes a memory (48) which stores a program for controlling the corresponding operational device (11, 15, 20, 52).

6. The apparatus according to claim 3, wherein each unit controller includes interface means (50) connected to the operational device (11, 15, 20, 52) and said data control means (42), for detecting conditions of the operational device (11, 15, 20, 52) to output the result of detection to said data control means (42).

7. The apparatus according to claim 3, wherein said data control means of each unit controller includes at least one central processing unit (CPU) (58).

8. The apparatus according to claim 3, wherein the communication means are data buses (59) for connecting all of said data control means of the unit controllers to one another, wherein each of said data control means includes:
first control means for outputting data about the status of its own working unit to other data control means of other working units through the data buses; and
second control means for inputting data about the status of other working units, which are transmitted from other data control means through the data buses, to said storage means.

9. The apparatus according to any one of claims 3 to 8 further including at least one operation panel (20) operated by an operator, in order to control the manufacturing system.

## Patentansprüche

1. Verfahren zur Steuerung eines Fertigungssystems, mit einer Mehrzahl von Arbeitseinheiten (12), deren jede eine Betriebseinrichtung (11, 15, 20, 52) zum Durchführen einer vorgegebenen Bearbeitungstätigkeit aufweist, wobei das Fertigungssystem des weiteren eine Mehrzahl von Steuereinheiten (21) aufweist, die den jeweiligen Arbeitseinheiten entsprechen, und wobei jede der Steuereinheiten Datenspeichereinrichtungen (44) aufweist und ihre eigene entsprechende Arbeitseinrichtung, basierend auf Daten, die in deren eigenen Datenspeichereintichtungen gespeichert sind, steuert; wobei jede Steuereinheit ferner Datensteuereinrichtungen (42) aufweist, die mit der Datenspeichereinrichtung (44) und mit allen anderen Steuereinheiten (21) über Kommunikationseinrichtungen (59) verbunden ist, um die in der Datenspeichereinrichtung (44) gespeicherten Daten des Arbeitseinheits-Betriebszustands durch die neuesten Daten über den Betriebszustandes bei allen Arbeitseinheiten einschließlich deren eigenen Arbeitseinheit zu erneuern, wobei
das Verfahren den Schritt des Speicherns von Daten über den Betriebszustand aller Arbeitseinheiten in der Datenspeichereinrichtung (44) einer jeden Steuereinheit; und das Steuern der jeweiligen Betriebseinrichtungen (11, 15, 20, 52) basierend auf den Daten des Arbeitseinheits-Betriebszustands, die in der Datenspeichereinrichtung (44) gespeichert sind, aufweist,
dadurch gekennzeichnet, daß das Verfahren des weiteren der Schritt der Erneuerung der in der Datenspeichereinrichung (44) gespeicherten Daten des Arbeitseinheits-Betriebszustandes einer jeden Steuereinheit jedesmal dann durchgeführt wird, wenn mit den neuesten Daten irgendeine der Arbeitseinheiten ihren Betriebszustand ändert, wodurch alle Steuereinheiten (21) stets gemeinsam die neuesten Daten der Arbeitseinheits-Betdebszustände besitzen.

2. Verfahren nach Anspruch 1, in welchem sich einige der Daten des Funktionsstatus auf einige aller Arbeitseinheiten beziehen, welche einen gemeinsame Steuereinheit haben, die die jeweiligen Betriebseinrichtungen (11,15,20,52) steuert.

3. Vorrichtung zur Steuerung eines Fertigungssystems mit einer Mehrzahl von Arbeitseinheiten (12), deren jede eine Betriebseinrichtung (11, 15, 20, 52), zum Durchführen einer vorgegebenen Bearbeitungstätigkeit, aufweist, wobei die Vorrichtung des weiteren eine Mehrzahl von Steuereinheiten (21), die den jeweiligen Arbeitseinheiten entsprechen, aufweist, und jede davon die jeweilige Betriebseinrichtung ihrer eigenen Arbeitseinheit steuert,
und Kommunikationseinrichtungen (59), die mit allen Steuereinheiten (21) verbunden sind, wobei die Vorrichtung in jeder der Steuereinheiten (21) Speichereinrichtungen (44) aufweist, um Daten bezüglich des Betriebszustands aller Arbeitseinheiten, einschließlich ihrer eigenen Arbeitseinheit, zu speichern,
sowie eine mit der Datenspeichereinrichtung (44) verbundene Antriebssteuereinrichtung (46,48,50) um die jeweilige Betriebseinrichtung (11,15,20,52) zu steuern, basierend auf den Daten des Arbeitseinheit-Betriebszustands der, die in der Speichereinrichtung (44) gespeichert sind,
wobei die Vorrichtung dadurch gekennzeichnet ist,
daß jede der Steuereinheiten (21) Datensteuereinrichtungen (42) aufweist, die mit den Speichereinrichtungen (44) und mit allen anderen Steuereinheiten (21) über Kommunikationseinrichtungen (59) verbunden sind, um den in der Speichereinrichtung gespeicherten Betriebszustand der Arbeitseinheit durch die neuesten Daten bezüglich des Betriebszustandes aller Arbeitseinheiten, einschließlich der eigenen Arbeitseinheiten, zu erneuern, wodurch alle Steuereinheiten (21) stets die neuesten Daten des Arbeitseinheits-Betriebszustandes gemeinsam haben.

4. Vorrichtung nach Anspruch 3,
bei der die Speichereinrichtungen jeder Steuereinheit einen Datenspeicher (44) enthält der durch einen Random Access Memory (RAM) gebildet ist.

5. Vorrichtung nach Anspruch 3,
bei der die Antriebssteuereinrichtung jeder Steuereinheit einen Speicher (48) enthält, der ein Programm zum steuern der jeweiligen Betriebseinrichtungen (11,15,20,52) gespeichert hat.

6. Vorrichtung nach Anspruch 3,
bei der jede Steuereinheit eine Schnittstelle (50) enthält, die mit der Betriebseinrichtung (11,15,20,52) und der Datensteuereinrichtung (42) verbunden ist, um Zustände der Betriebseinrichtung (11,15,20,52) zu erfassen, um das Ergebnis der Erfassung zur Datensteuereinrichtung (42) auszugeben.

7. Vorrichtung nach Anspruch 3,
bei der die Datensteuereinrichtung jeder Steuereinheit mindestens eine Zentrale Prozessor-Einheit (Central Processing Unit = CPU) aufweist.

8. Vorrichtung nach Anspruch 3,
bei der die Kommunikationseinrichtungen Datenbusse (59) zum miteinander verbinden aller Datensteuereinrichtungen der Steuereinheiten darstellen, wobei jede der Datensteuereinrichtungen aufweist:
- eine erste Steuereinrichtung zum Ausgeben von Zustandsdaten der eigenen Arbeitseinheit an andere Steuereinrichtungen anderer Arbeitseinheiten Über die Datenbusse, und
- eine zweite Steuereinrichtung zum Eingeben von Daten des Zustandes anderer Arbeitseinheiten, die von anderen Datemteuereintichtungen über die Datenbusse übermittelt werden, an die Speichereinrichtungen.

9. Vorrichtung nach einem der Ansprüche 3 bis 8,
die des weiteren mindestens eine Bedien-Tafel (20) aufweist, welche von einer Bedienperson bedienbar ist, um das Fertigungssystem zu steuern.

## Revendications

1. Procédé de contrôle d'un système de fabrication comprenant une pluralité d'unités de travail (12) dont chacune comprend un dispositif opérationnel (11, 15, 20, 52) pour effectuer un travail d'usinage donné, le système de fabrication comprenant, en outre, une pluralité de contrôleurs d'unités (21) qui correspondent aux unités de travail respectives, chacun des contrôleurs d'unités comprenant des moyens de stockage de données (44) et contrôlant son propre dispositif opérationnel correspondant sur la base de données stockées dans ses propres moyens de stockage de données ; chaque contrôleur d'unité comprenant, en outre, des moyens de contrôle de données (42) reliés aux moyens de stockage de données (44) et à tous les autres contrôleurs d'unités (21) par l'intermédiaire de moyens de communication (59) prévus pour rafraîchir les données sur l'état opérationnel des unités de travail, stockées dans les moyens de stockage (44) avec les données les plus récentes sur l'état opérationnel collectées au niveau de toutes les unités de travail, y compris sa propre unité de travail
le procédé comprenant l'étape de stockage des données sur l'état opérationnel de toutes les unités de travail dans les moyens de stockage de données (44) de chacun des contrôleurs d'unités ; et de
contrôle du dispositif opérationnel correspondant (11, 15, 20, 52) sur la base des données sur l'état opérationnel des unités de travail stockées dans les moyens de stockage (44)
le procédé étant caractérisé en ce qu'il comprend, en outre, l'étape qui consiste à rafraîchir les données sur l'état opérationnel des unités de travail stockées dans les moyens de stockage de données (44) de chacun des contrôleurs d'unités avec les données sur l'état opérationnel les plus récentes, chaque fois que l'une quelconque de l'ensemble des unités de travail change d'état opérationnel, tous les contrôleurs d'unités (21) ayant toujours en commun les données les plus récentes sur l'état opérationnel des unités de travail.

2. Procédé selon la revendication 1, dans lequel certaines des données sur l'état opérationnel concernent certaines des unités de travail qui possèdent un contrôleur d'unités commun, qui contrôle les dispositifs opérationnels correspondants (11, 15, 20, 52).

3. Appareil pour contrôler un système de fabrication, le système de fabrication comprenant une pluralité d'unités de travail (12) dont chacune possède un dispositif opérationnel (11, 15, 20, 52) pour effectuer un travail d'usinage donné, l'appareil comprenant une pluralité de contrôleurs d'unités (21) qui correspondent aux unités de travail respectives, et dont chacun contrôle le dispositif opérationnel de sa propre unité de travail, et des moyens de communication (59) reliés à tous les contrôleurs d'unités (21), l'appareil comprenant, dans chacun des contrôleurs d'unités (21), des moyens de stockage (44) pour stocker des données sur l'état opérationnel de toutes les unités de travail, y compris leur propre unité de travail, des moyens de contrôle de commande (46, 48, 50) étant reliés aux moyens de stockage (44) pour contrôler le dispositif opérationnel (11, 15, 20, 52) correspondant sur la base des données sur l'état opérationnel des unités de travail stockées dans les moyens de stockage (44),
l'appareil étant caractérisé en ce que chacun des contrôleurs d'unités (21) comprend :
des moyens de contrôle de données (42) reliés aux moyens de stockage (44) et à tous les autres contrôleurs d'unités (21) par l'intermédiaire de moyens de communication (59) prévus pour rafraîchir les données sur l'état opérationnel des unités de travail, stockées dans les moyens de stockage avec les données les plus récentes sur l'état opérationnel de toutes les unités de travail (12), y compris leur propre unité de travail, tous les contrôleurs d'unités (21) ayant toujours en commun les données les plus récentes sur l'état opérationnel des unités de travail.

4. Appareil selon la revendication 3, dans lequel les moyens de stockage de chaque contrôleur d'unités comprennent une mémoire (44) constituée par une mémoire RAM.

5. Appareil selon la revendication 3, dans lequel les moyens de contrôle de commande de chaque contrôleur d'unités comprennent une mémoire (48) qui conserve un programme de contrôle du dispositif opérationnel correspondant (11, 15, 20, 52).

6. Appareil selon la revendication 3, dans lequel chaque contrôleur d'unité comprend des moyens formant interface (50) reliés au dispositif opérationnel (11, 15, 20, 52) et aux moyens de contrôle de données (42), afin de détecter les états du dispositif opérationnel (11, 15, 20, 52) afin d'envoyer le résultat de la détection aux moyens de contrôle de données (42).

7. Appareil selon la revendication 3, dans lequel les moyens de contrôle de données de chaque contrôleur d'unités comprennent au moins une unité centrale (58).

8. Appareil selon la revendication 3, dans lequel les moyens de communication sont des bus de données (59) destinés à relier les uns avec les autres tous les moyens de contrôle de données des contrôleurs d'unités, chacun des moyens de contrôle de données comprenant :
des premiers moyens de contrôle destinés à envoyer des données sur l'état de leur propre unité de travail à d'autres moyens de contrôle de données d'autres unités de travail, par l'intermédiaire des bus de données ; et
des deuxièmes moyens de contrôle destinés à recevoir des données sur l'état d'autres unités de travail, qui sont transmises, en provenance d'autres moyens de contrôle de données, par l'intermédiaire des bus de données, vers les moyens de stockage.

9. Appareil selon l'une quelconque des revendications 3 à 8 comprenant, en outre, au moins un panneau d'exploitation (20) sur lequel intervient un opérateur afin de contrôler le système de fabrication.
